# EUROPÄISCHE PATENTSCHRIFT

(11) **EP 3 077 890 B1**
(45) Veröffentlichungstag und Bekanntmachung des Hinweises auf die Patenterteilung: **09.09.2020**
(21) Anmeldenummer: 14836994.5
(22) Anmeldetag: 05.12.2014
(51) Int. Cl.: G06F 3/01, H01H 13/85, G06F 3/041, H01H 3/00

(54) **EINGABEELEMENT FÜR ELEKTRONISCHE APPARATE**
INPUT ELEMENT FOR ELECTRONIC APPARATUSES
ÉLÉMENT D'ENTRÉE POUR DES APPAREILS ÉLECTRONIQUES

(30) Priorität: 06.12.2013 AT 9432013
(43) Veröffentlichungstag der Anmeldung: 12.10.2016
(73) Patentinhaber: Next System Vertriebsges.m.b.H., 1210 Wien (AT)
(72) Erfinder: KELTSCHA, Gregor, A-3040 Neulengbach (AT); PLACHY Thomas, A-4813 Altmünster (AT); NUSSBAUMER, Michael, A-4690 Pitzenberg (AT)
(74) Vertreter: Lohmanns Lohmanns & Partner mbB
(86) Internationale Anmeldenummer: PCT/AT2014/000218
(87) Internationale Veröffentlichungsnummer: WO 2015/081356

(56) Entgegenhaltungen:
- US-A1- 2010 171 715
- US-A1- 2011 227 872

## Beschreibung

Die Erfindung betrifft ein Eingabeelement für elektronische Apparate, insbesondere solche für den Einsatz in Kraftfahrzeugen, mit einer translatorisch bewegbaren Berührungsfläche, die mit einem Aktuator zusammenwirkt, wobei der Aktuator als elektrostatischer Parallelplatten-Aktuator ausgebildet ist, dessen Elektrodenplatten in einem variablen Normalabstand zueinander gehalten sind, wobei die mit der Berührungsfläche zusammenwirkende Elektrodenplatte gegen die Kraft eines Rückstellelements auslenkbar ist.

Ein solches Eingabeelement ist beispielsweise in der WO 2010/080917 A1 beschrieben. Das Eingabeelement ist beispielsweise als berührungsempfindliche elektronische Anzeigeeinrichtung (Touchscreen) ausgebildet. Ein Touchscreen ist ein kombiniertes Ein- und Ausgabegerät, bei dem durch Berührung von Teilen eines Bildes der Programmablauf eines technischen Gerätes, meist eines Computers, direkt gesteuert werden kann. Das Eingabeelement kann auch ein Touchpad eines technischen Gerätes sein. Dadurch, dass die Berührungsfläche des Touchscreens oder Touchpads translatorisch bewegbar ist, wobei die translatorische Bewegung mittels eines Aktuators gesteuert wird, wird die Möglichkeit eines haptischen Feedbacks geschaffen. Die Ansteuerung des Aktuators kann dabei in Abhängigkeit von Benutzereingaben erfolgen, beispielsweise um eine Benutzereingabe zu bestätigen. Ein solches haptisches Feedback erleichtert die Bedienung eines technischen Geräts mittels Touchscreen oder Touchpad.

Der Aktuator zum Antrieb der translatorischen Bewegung der Berührungsfläche ist bei der in der WO 2010/080917 A1 beschriebenen Ausführung als elektrostatischer Parallelplatten-Aktuator ausgebildet. Ein elektrostatischer Parallelplatten-Aktuator umfasst zwei Elektrodenplatten, die in einem variablen Normalabstand zueinander gehalten sind. Die eine Elektrodenplatte ist relativ zu einem Gehäuse oder dgl. des elektronischen Geräts starr angeordnet. Die andere, mit der Berührungsfläche zusammenwirkende Elektrodenplatte ist gegen die Kraft eines Rückstellelements auslenkbar. Zwischen den beiden Elektrodenplatten ist ein Zwischenraum vorgesehen, in dem ein Dielektrikum angeordnet ist. Wenn nun eine Spannung an die Elektrodenplatten angelegt wird, entstehen elektrostatische Kräfte, welche im Sinne einer Abstoßung oder Anziehung der Elektrodenplatten wirken und eine entsprechende Auslenkung der beweglich gehaltenen Elektrodenplatte bewirken. Das Rückstellelement sorgt für die Rückstellung der beweglich gehaltenen Elektrodenplatte in ihre Ausgangsposition.

Haptische Feedback-Profile können eine Abfolge von Auslenkungs- und Rückstellungsbewegungen der beweglichen Elektrodenplatte in verschiedenen Signalformen, definiert durch Flanke, Impulsdauer und Amplitude umfassen. Hierfür ist es günstig, wenn die Auslenkungs- und Rückstellungscharakteristik des Aktuators über einen möglichst weiten Auslenkungsamplitudenbereich beherrschbar und gleichmäßig ist. In diesem Zusammenhang besteht jedoch das Problem, dass die Auslenkungskraft bei elektrostatisch arbeitenden Aktuatoren, bei denen die Auslenkung im Wesentlichen parallel zum elektrischen Feld erfolgt, über den Auslenkungshub eine andere Kennlinie aufweist als die Rückstellkraft. Während nämlich die Rückstellkraft bei Rückstellelementen mit konstanter Federkennlinie mit steigendem Auslenkungshub linear oder nichtlinear ansteigt, ist die elektrostatische Auslenkungskraft proportional dem Quadrat der angelegten elektrischen Spannung geteilt durch den jeweiligen momentanen Plattenabstand. Dies bedeutet, dass die Auslenkungskraft mit sich verringerndem Plattenabstand, d.h. mit steigendem Auslenkungshub im Wesentlichen exponentiell ansteigt. Dies wiederum führt dazu, dass sich das Kräftegleichgewicht zwischen Auslenkungs- und Rückstellkraft mit steigendem Auslenkungshub in Richtung zur Auslenkungskraft verschiebt, woraus eine unkontrollierte Bewegung resultieren kann.

Je größer der Auslenkungshub der Berührungsfläche ist, desto störender ist ein Verkippen der Berührungsfläche bzw. der mit der Berührungsfläche zusammenwirkenden Elektrodenplatte bei der translatorischen Bewegung. Insbesondere bei einer außermittigen Krafteinwirkung auf die Berührungsfläche beeinträchtigt ein Verkippen derselben den haptischen Feedback-Effekt.

Das Dokument US 2010/171715 A1 offenbart ein Eingabeelement der eingangs genannten Art.

Das Dokument US 2011/227872 A1 offenbart einen Touchscreen, umfassend einen Aktuatormechanismus, der aus einer oberen leitfähigen Platte und einer unteren leitfähigen Platte sowie einem zwischen den Platten angeordneten Dielektrikum besteht.

Die Erfindung zielt daher drauf ab, ein Eingabeelement mit einem elektrostatischen Parallelplatten-Aktuator der eingangs genannten Art dahingehend zu verbessern, dass die Auslenkungs- und Rückstellungscharakteristik des Aktuators angeglichen wird ohne den Auslenkungshub insgesamt zu verringern. Gleichzeitig soll ein Verkippen der Berührungsfläche bzw. der Elektrodenplatten verhindert werden.

Zur Lösung dieser Aufgabe ist das Eingabeelement der eingangs genannten Art erfindungsgemäß im Wesentlichen derart weitergebildet, dass der elektrostatische Parallelplatten-Aktuator wenigstens drei übereinander angeordnete Elektrodenplatten aufweist, wobei die Elektrodenplatten jeweils relativ zur unmittelbar darunter liegenden Elektrodenplatte gegen die Kraft eines Rückstellelements auslenkbar gehalten sind, und dass eine Parallelführung für die mit der Berührungsfläche zusammenwirkende, oberhalb der wenigstens zwei anderen Elektrodenplatten angeordnete Elektrodenplatte vorgesehen ist. Die Erfindung sieht somit wenigsten einen Parallelplatten-Aktuatoren vor, wobei die erste Platte beispielsweise relativ zu einem Gehäuse starr angeordnet ist, die zweite, darüber liegende Platte relativ zu der ersten Platte auslenkbar gehalten ist und die dritte, über der zweiten Platte angeordnete und mit der Berührungsfläche zusammenwirkende Platte wiederum relativ zur zweiten Platte auslenkbar ist. Dadurch wird insgesamt ein größerer theoretischer Auslenkungshub ermöglicht. Dieser größere Auslenkungshub kann nun aber beispielsweise nur zur Hälfte ausgenützt werden ohne den Gesamthub im Vergleich zu einem herkömmlichen Aktuator mit gleichem Plattenabstand zu verringern, wobei gleichzeitig der Effekt ausgenutzt wird, dass die Kraft-Weg-Kennlinien der Auslenkung und der Rückstellung über den ersten Teilbereich des Auslenkungshubes, insbesondere über einen Teilbereich von < 30% keine übermäßigen Abweichungen zeigen, sodass die oben genannten Probleme vermieden werden können und in diesem Bereich auch bei gleichbleibender Spannung ein Kräftegleichgewicht erreicht werden kann.

Um auch bei einer außermittigen Krafteinwirkung auf die Berührungsfläche eine parallele Lage der Berührungsfläche zu gewährleisten, sieht die Erfindung weiters vor, dass eine Parallelführung für die mit der Berührungsfläche zusammenwirkende Elektrodenplatte vorgesehen ist. Die Parallelführung ist bevorzugt so ausgestaltet, das sie eine Parallelbewegung der Berührungsfläche erzwingt. Eine Parallelbewegung ist hierbei dadurch gekennzeichnet, dass jede Gerade in dem parallelbewegten Körper in allen Lagen parallel zu sich selbst bleibt.

Die Parallelführung ist bevorzugt so ausgebildet, dass nicht nur eine Parallelbewegung der Berührungsfläche, sondern eine Parallelbewegung aller auslenkbar gehaltenen Elektrodenplatten gewährleistet ist.

Die einzelnen Elektrodenplatten sind gegen die Kraft eines Rückstellelements auslenkbar gehalten. Dabei kann jeder Elektrodenplatte ein eigenes Rückstellelement zugeordnet sein. Alternativ kann ein gemeinsames Rückstellelement für die Rückstellung der wenigstens drei Elektrodenplatten verantwortlich sein. Das Rückstellelement muss hierbei nicht an allen drei Elektrodenplatten unmittelbar angreifen. Es reicht aus, wenn das Rückstellelement an lediglich einer der translatorisch bewegten Elektrodenplatten bzw. an der Berührungsfläche angreift, wobei die Rückstellung der anderen Elektrodenplatte(n) mittels der Parallelführung erfolgt, wenn diese so ausgebildet ist, dass sie die Bewegung aller auslenkbar gehaltenen Elektrodenplatten im Sinne einer Parallelbewegung miteinander koppelt.

Das Rückstellelement ist bevorzugt so angeordnet und ausgelegt, dass es im Ausgangszustand der Berührungsfläche, d.h. im nicht ausgelenkten Zustand der Elektrodenplatten, vorgespannt ist. Dadurch übt das Rückstellelement eine ständige Kraft aus, die verhindert, dass die Berührungsfläche auf Grund von mechanischen Erschütterungen und dgl. ausgelenkt wird.

Bevorzugt ist die Parallelführung als Parallelogrammführung ausgebildet.

Bevorzugt weist die Parallelogrammführung an wenigstens einer Seite der Elektrodenplatten zwei schwenkbare parallele Arme auf, die mit den Elektrodenplatten einzeln schwenkbar verbunden sind. Die schwenkbare Verbindung kann hierbei mittels Kurbellager, Gleitlager, Nadellager oder dgl. realisiert werden.

Insbesondere weist die Parallelogrammführung an zwei gegenüberliegenden Seiten der Elektrodenplatten jeweils zwei schwenkbare parallele Arme auf, die mit den Elektrodenplatten einzeln schwenkbar verbunden sind. Mit Vorteil ist hierbei vorgesehen, dass wenigstens ein Arm mit einem an der gegenüberliegenden Seite der Elektrodenplatten angeordneten Arm mittels einer Querstrebe verbunden ist. Dadurch wird sichergestellt, dass der momentane Schwenkwinkel der verbundenen Arme auf beiden Seiten der Elektrodenplatten übereinstimmt, sodass tatsächlich eine präzise Parallelbewegung erfolgt. Die Querstrebe kann bevorzugt durch eine der Elektrodenplatten hindurch verlaufen, bevorzugt durch diejenige Elektrodenplatte, die starr bzw. ortsfest angeordnet ist. Die Querstrebe ist in diesem Fall drehfest mit den beiden Armen verbunden.

In besonders vorteilhafter Weise kann das Rückstellelement in die Parallelführung integriert werden, zu welchem Zweck die Ausführung bevorzugt derart weitergebildet ist, dass das Rückstellelement von wenigstens einem Federelement gebildet ist, das zwei an der selben Seite der Elektrodenplatte angeordnete Arme miteinander verbindet.

Alternativ kann das Rückstellelement auch so ausgebildet sein, dass es von wenigstens einem Federelement gebildet ist, das zentral angeordnet ist und die oberste und die unterste Elektrodenplatte miteinander verbindet.

Eine weitere Verbesserung der Führung der Elektrodenplatte wird bevorzugt dadurch erreicht, dass zwei benachbarte Elektrodenplatten jeweils durch wenigstens einen sich umfangsmäßig erstreckenden Abstandhalter in einem Abstand voneinander gehalten sind. Der Abstandhalter kann hierbei elastisch nachgiebig ausgebildet sein und so gleichzeitig das Rückstellelement ausbilden.

Insbesondere bei größerer Flächenerstreckung der Elektrodenplatten erfolgt beim Aufeinanderzubewegen von jeweils zwei benachbarten Elektrodenplatten in größerem Umfang eine Luftverdrängung aus der dazwischenliegenden Kammer. Dies führt einerseits zu einer je nach Anwendungsfall erwünschten Dämpfung der Platten beim Aufeinanderzubewegen, gleichzeitig aber auch dazu, dass die Elektrodenplatten beim nachfolgenden Auseinanderbewegen auf Grund der zunächst langsam in den Zwischenraum wieder einströmenden Luft gebremst werden, was im Hinblick auf den gewünschten haptischen Feedback-Effekt nachteilig ist. Um diesen bremsenden Effekt zu reduzieren, sieht eine bevorzugte Weiterbildung der Erfindung Luftkanäle vor, die in den Zwischenraum zwischen zwei benachbarten Elektrodenplatten münden, um einen Luftstrom in den oder aus dem Zwischenraum zu erlauben. Die Luftkanäle können beispielsweise als zum Zwischenraum hin offene, in den Elektrodenplatten ausgeformte Nuten ausgebildet sein, in die seitlich Luft von außerhalb des Zwischenraums einströmen kann. Alternativ können die Kanäle auch als die Elektrodenplatten durchsetzende Löcher ausgebildet sein. Gemäß einer bevorzugten Weiterbildung kann der Strömungsquerschnitt der Luftkanäle veränderbar gestaltet sein, um auf diese Weise den haptischen Feedback-Effekt zu beeinflussen.

Eine weitere Herausforderung bei Eingabeelementen der eingangs genannten Art liegt in der Abdichtung der Berührungsoberfläche gegenüber dem Gehäuse des Eingabeelements. Zwischen der Berührungsoberfläche und dem Gehäuse muss zwangsläufig ein Spalt angeordnet sein, der die Relativbewegung der Berührungsoberfläche relativ zum Gehäuse erlaubt. Die Abdichtung erfolgt gemäß einer vorteilhaften Ausbildung der Erfindung dadurch, dass zwischen einem Gehäuserand des Eingabeelements und einem Randbereich der Berührungsfläche ein umlaufendes flexibles Dichtungselement angeordnet ist.

Eine erste bevorzugte Ausbildung sieht in diesem Zusammenhang vor, dass der Gehäuserand nach innen vorspringend ausgebildet ist und den Randbereich der Berührungsfläche übergreift, sodass das Dichtungselement in Richtung des Auslenkungshubes der mit der Berührungsfläche zusammenwirkenden Elektrodenplatte komprimierbar ist.

Gemäß einer alternativen Ausbildung überragt der Rand der Berührungsfläche den Aktuator seitlich, wobei das Dichtungselement so zwischen dem Rand der Berührungsfläche und dem Gehäuse angeordnet ist, dass es in Richtung des Auslenkungshubes der mit der Berührungsfläche zusammenwirkenden Elektrodenplatten komprimierbar ist.

Gemäß einer anderen alternativen Ausbildung überbrückt das Dichtungselement einen radialen Ringspalt zwischen der Berührungsfläche und dem Gehäuse.

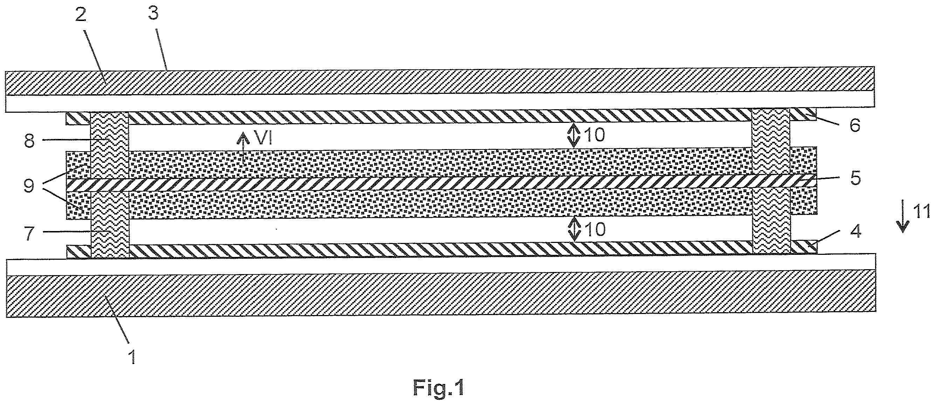

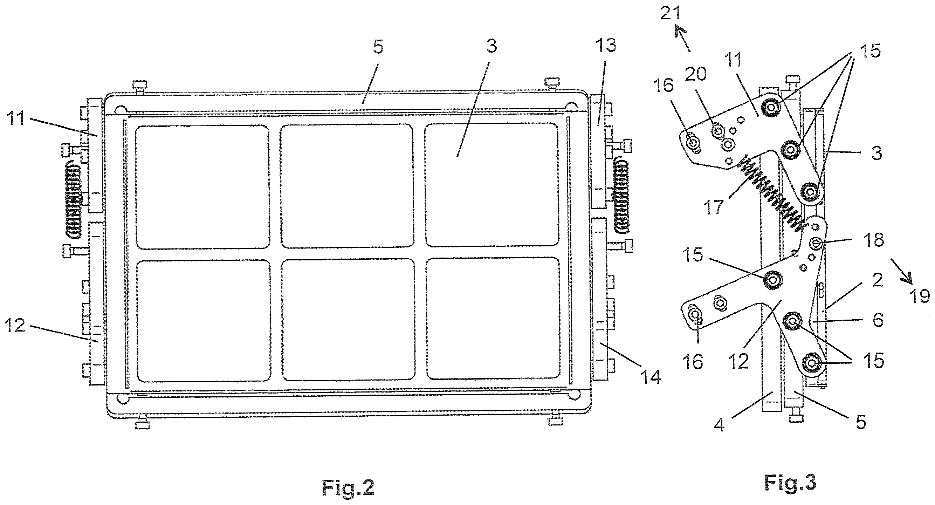

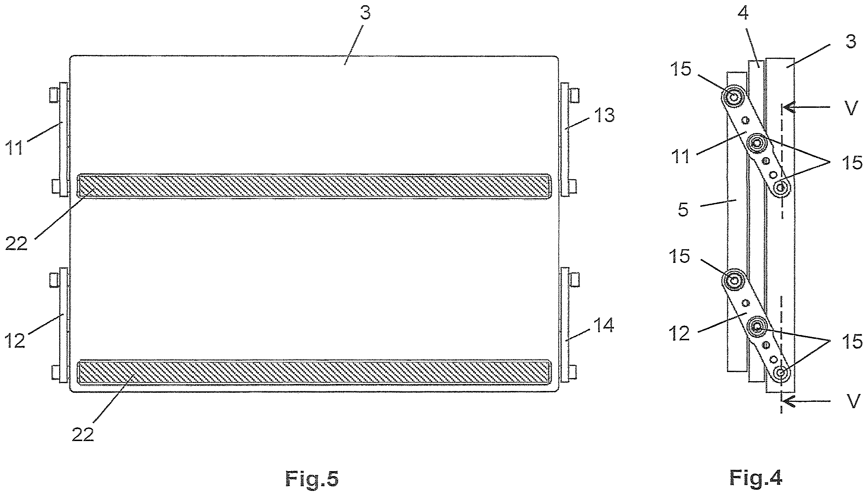

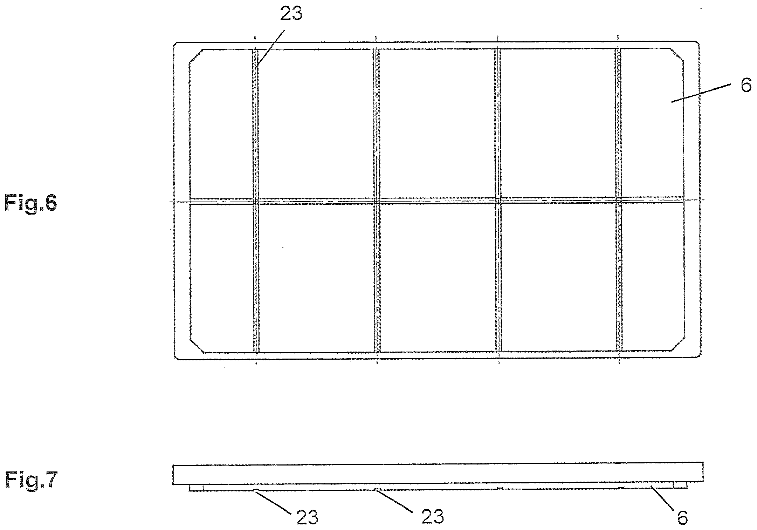

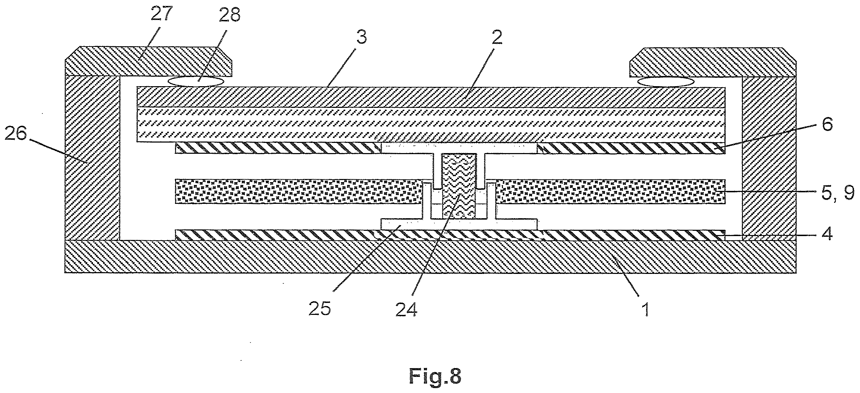

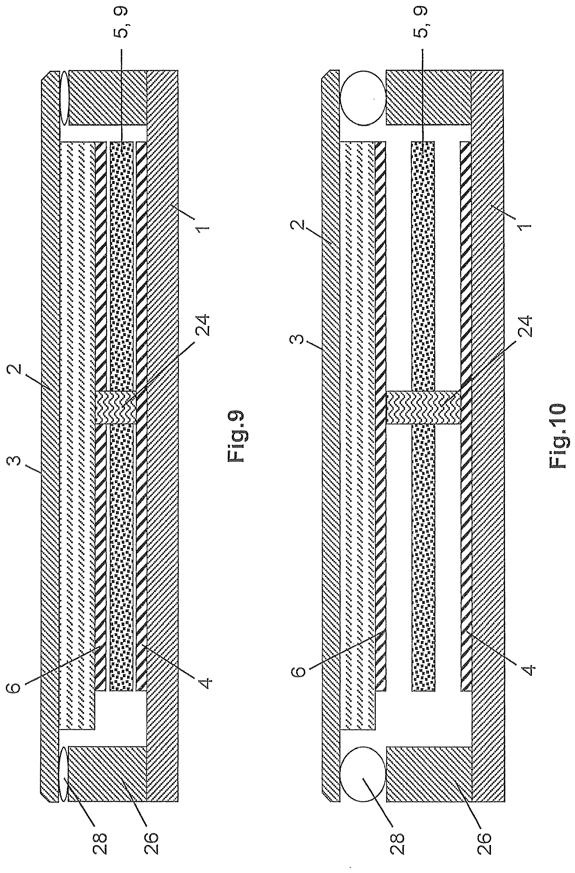

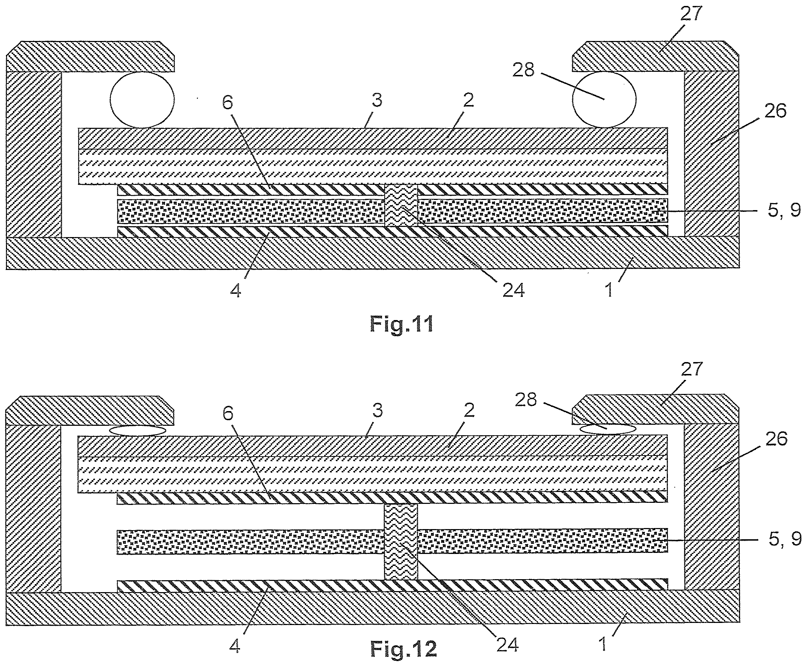

Die Erfindung wird nachfolgend anhand von in der Zeichnung schematisch dargestellten Ausführungsbeispielen näher erläutert. In dieser zeigen Fig. 1 eine Schnittansicht des erfindungsgemäßen Eingabeelements, Fig. 2 eine Draufsicht auf ein Eingabeelement in einer abgewandelten Ausführung, Fig. 3 eine Seitenansicht auf das Eingabeelement gemäß Fig. 2, Fig. 4 eine Seitenansicht auf eine weitere Ausführung des Eingabeelements, Fig. 5 eine Schnittansicht des Eingabeelements gemäß Fig. 4, Fig. 6 eine Ansicht auf eine Elektrodenplatte, Fig. 7 eine Seitenansicht auf die Elektrodenplatte gemäß Fig. 6, Fig. 8 eine weitere Ausführung des erfindungsgemäßen Eingabeelements in einer Schnittansicht, Fig. 9 eine weitere Ausführung des erfindungsgemäßen Eingabeelements in einer Schnittansicht mit der Berührungsfläche in einer nach unten bewegten Position, Fig. 10 das Eingabeelement gemäß Fig. 9 in der Ausgangsposition, Fig. 11 eine weitere Ausbildung des erfindungsgemäßen Eingabeelements in einer Schnittansicht mit der Berührungsfläche in einer nach unten verlagerten Position und Fig. 12 das Eingabeelement gemäß Fig. 11 mit der Berührungsfläche in der Ausgangsposition.

Fig. 1 zeigt den grundsätzlichen Aufbau des erfindungsgemäßen Eingabeelements. Das Eingabeelement weist eine Gehäuseplatte 1 auf, die zu einem Gehäuse eines elektronischen Apparats gehört. Mit 2 ist ein Touchscreen bezeichnet, d.h. eine Kombination einer elektronischen Anzeigevorrichtung, wie beispielsweise eine LCD-Anzeige, mit einem Berührungssensor, sodass durch Berührung von Teilen des auf der Anzeigeeinrichtung angezeigten Bildes der Programmablauf des technischen Geräts gesteuert werden kann. Der Touchscreen 2 weist eine Berührungsfläche 3 auf, welche durch den Finger eines Benutzers berührt werden kann, um das elektronische Gerät zu steuern. Zwischen dem Touchscreen 2 und der Gehäuseplatte 1 ist ein elektrostatischer Parallelplatten-Aktuator angeordnet, der insgesamt drei Elektrodenplatten 4, 5 und 6 aufweist. Die erste Elektrodenplatte 4 ist mit der Gehäuseplatte 1 starr verbunden. Die zweite Elektrodenplatte 5 ist mittels Federelementen 7 an der ersten Elektrodenplatte bzw. der Gehäuseplatte 1 abgestützt. Die dritte Elektrodenplatte 6 wiederum ist mittels Federelementen 8 an der zweiten Elektrodenplatte 5 abgestützt. Die dritte Elektrodenplatte 6 ist mit dem Touchscreen 2 zu gemeinsamer Bewegung verbunden. Im Zwischenraum zwischen jeweils zwei Elektrodenplatten ist ein Dielektrikum 9 angeordnet, das im vorliegenden Fall an beiden Seiten der zweiten Elektrodenplatte 5 befestigt ist. Zwischen dem Dielektrikum 9 und der ersten Elektrodenplatte 4 bzw. der dritten Elektrodenplatte 6 verbleibt ein Luftspalt 10. Aufgrund der Anordnung der Federelemente 7 und 8 ist die zweite Elektrodenplatte 5 relativ zur gehäusefesten ersten Elektrodenplatte 4 ausgehend von der in Fig. 1 dargestellten Ausgangsposition in Richtung des Pfeils 11 auslenkbar gehalten. Die dritte Elektrodenplatte 6 wiederum ist mit Hilfe des Federelements 8 relativ zur zweiten Elektrodenplatte 5 in Richtung des Pfeils 11 auslenkbar gehalten. Die Elektrodenplatten 4, 5, und 6 sind so mit einer elektrischen Spannungsversorgung verbunden (nicht dargestellt), dass zwischen zwei benachbarten Elektrodenplatten eine Spannungsdifferenz aufgebaut werden kann, wodurch elektrostatische Kräfte entstehen, welche zu einer gegenseitigen Anziehung der Elektrodenplatten führen. Sobald die elektrische Spannung abfällt, werden die Elektrodenplatten 5 und 6 aufgrund der rückstellenden Kraft der Federelemente 7 und 8 wieder in ihre Ausgangsposition verlagert.

Die Ansteuerung des Parallelplatten-Aktuators kann grundsätzlich beliebig erfolgen, wobei in Abhängigkeit von Benutzereingaben beliebige haptische Feedbackprofile realisierbar sind. Ein Feedbackprofil umfasst in der Regel eine Abfolge mehrerer Auslenkungsbewegungen der Berührungsfläche 3 mit einer vorgegebenen Signalform, definiert durch Flanke, Impulsdauer und Amplitude.

In den Figuren 2 und 3 ist eine erste Ausführung einer Parallelführung der Elektrodenplatten 4, 5 und 6 dargestellt. Die dargestellte Parallelführung ist als Parallelogrammführung ausgebildet und umfasst an jeder Seite des Eingabeelements zwei schwenkbare Arme 11, 12 bzw. 13 und 14. Die Arme sind parallel zueinander angeordnet und sind seitlich mit den Elektrodenplatten 4, 5 und 6 mittels Schwenklager 15 verbunden. Eine Parallelogrammführung ergibt sich dabei dadurch, dass die Lager 15 in jedem Arm entlang einer Geraden liegen, die zu den entsprechenden Geraden der anderen Arme parallel verläuft. Um eine gleichsinnige Schwenkbewegung um den gleichen Schwenkwinkel an beiden Seiten der Elektrodenplatten sicher zu stellen, sind die Arme 11 und 13 mittels einer nicht dargestellten Querstrebe miteinander verbunden. Die Querstrebe kann dabei beispielsweise an der Stelle 16 befestigt sein. In gleicher Weise können die Arme 12 und 14 mittels einer weiteren Querstrebe miteinander verbunden sein.

In der Seitenansicht gemäß Fig. 3 ist ersichtlich, dass zwischen den Armen 11 und 12 eine Feder 17 gespannt ist, die für eine Rückstellung der Elektrodenplatten nach ihrer Auslenkung verantwortlich ist. Die Feder 17 ist dabei an im Bezug auf das in der Elektrodenplatte 4 ausgebildete Schwenklager entgegengesetzt angeordneten hebelartigen Fortsätzen der Arme 11 und 12 befestigt. Dies führt dazu, dass der Angriffspunkt 18 des Federelements 17 bei einer Betätigung des Aktuators entsprechend dem Pfeil 19 und der Befestigungspunkt 20 entsprechend dem Pfeil 21 ausschwenkt, sodass sich eine Auseinanderbewegung der beiden Angriffspunkte 18 und 20 ergibt. Bei der durch die Feder 17 bewirkten Rückstellbewegung werden die Angriffspunkte 18 und 20 wieder zueinander bewegt.

In den Fig. 4 und 5 ist eine alternative Ausbildung der Parallelogrammführung dargestellt. Dabei ist Fig. 5 eine Schnittansicht entlang der Linie V-V der Fig. 4. Die Arme 11, 12, 13 und 14 weisen nun keine hebelartigen Fortsätze auf, sodass der Platzbedarf verringert wird. Gegenüberliegende Arme sind durch die in Fig. 5 dargestellten Querstreben 22 verbunden, wobei die Querstreben jeweils drehfest mit den entsprechenden Armen verbunden sind. Die Querstreben 22 verlaufen dabei durch die Elektrodenplatte 3 hindurch, wodurch ebenfalls eine Platzersparnis erzielt wird.

Fig. 6 zeigt eine Ansicht der Elektrodenplatte 6 gemäß dem Pfeil VI der Fig. 1. Es ist ersichtlich, dass die dem Zwischenraum 10 zugewandte Oberfläche der Elektrodenplatte 6 eine Mehrzahl einander kreuzende Luftkanäle 23 aufweist. Die Luftkanäle 23 sind, wie insbesondere in Fig. 7 ersichtlich, als Nuten ausgebildet, in die seitlich Luft einströmen kann.

In Fig. 8 ist eine Ausführung des erfindungsgemäßen Eingabeelements dargestellt, welche mit einem einzigen zentralen Federelement 24 als Rückstellelement auskommt. Soweit die dargestellte Ausführung mit der Ausführung gemäß Fig. 1 übereinstimmt, wurden die Bezugszeichen beibehalten. Das zentrale Federelement 24 stützt sich lediglich an der untersten, gehäusefesten Elektrodenplatte 4 und an der mit der Berührungsfläche 3 gekoppelten Elektrodenplatte 6 ab. Die mittlere Elektrodenplatte 5 sowie die daran angebrachten Schichten des Dielektrikums 9 hingegen wirken nicht unmittelbar mit dem Federelement 24 zusammen, sondern sind lediglich an dem unteren Gehäuseteil 25 des Federelements 24 geführt. Da bei der Ausbildung gemäß Fig. 8 eine parallele Zwangsführung der Elektrodenplatten 4, 5 und 6 beispielsweise in der Ausführung gemäß den Fig. 4 und 5 oder in der Ausbildung gemäß den Fig. 2 und 3 vorgesehen ist, wird die mittlere Elektrodenplatte 5 durch die Parallelführung gemeinsam mit der Elektrodenplatte 6 zurückgestellt.

In Fig. 8 ist weiters eine Abdichtung des erfindungsgemäßen Eingabeelements relativ zu einem Gehäuse dargestellt. Das Gehäuse besteht dabei aus der Gehäuseplatte 1 sowie aus der Gehäusewand 26. Weiters umfasst das Gehäuse einen die Berührungsfläche 3 seitlich übergreifenden Gehäuserandteil 27. Zwischen dem Gehäuserandteil 27 und der Berührungsfläche 3 ist nun ein ringförmiges Dichtungselement 28 angeordnet, das in der in Fig. 8 dargestellten Ausgangsposition komprimiert ist. Das ringförmige Dichtungselement 28 dichtet den Aktuator gegenüber Umgebungseinflüssen wirksam ab.

In den Fig. 9 bis 14 sind abgewandelte Ausbildungen der Gehäuseabdichtung dargestellt, wobei für gleiche Teile wiederum die gleichen Bezugszeichen wie in den Fig. 1 und 8 verwendet werden. Die Ausbildung gemäß Fig. 9 und 10 entspricht im Wesentlichen der Ausbildung gemäß Fig. 8. Abweichend von Fig. 8 erstreckt sich der Touchscreen 2 jedoch bis zum Rand des Gehäuses, d.h. bis zur Gehäusewand 26, wobei das ringförmige Dichtungselement 28 nun zwischen der Oberseite der Gehäusewand 26 und der Unterseite des entsprechenden Randbereichs des Touchscreens 2 angeordnet ist. In Fig. 10 ist der Ausgangszustand des Eingabeelements dargestellt, wobei sich das Dichtungselement 28 im nicht komprimierten Zustand befindet. Nach einer Auslenkung der Elektrodenplatten 5 und 6 bewegt sich der Touchscreen 2 nach unten (Fig. 9), sodass das Dichtungselement 28 komprimiert wird. Das Dichtungselement 28 kann, sofern es elastisch ist, die Rückstellbewegung des Touchscreens 2 unterstützen.

Die Ausbildung gemäß den Fig. 11 und 12 entspricht im Wesentlichen der Ausbildung gemäß Fig. 8, wobei nun zusätzlich der ausgelenkte Zustand der Elektrodenplatten dargestellt ist (Fig. 11).

## Patentansprüche

1. Eingabeelement für elektronische Apparate mit einer translatorisch bewegbaren Berührungsfläche (3), die mit einem Aktuator zusammenwirkt, wobei der Aktuator als elektrostatischer Parallelplatten-Aktuator ausgebildet ist, dessen Elektrodenplatten (4,5,6) in einem variablen Normalabstand zueinander gehalten sind, wobei die mit der Berührungsfläche (3) zusammenwirkende Elektrodenplatte (6) gegen die Kraft eines Rückstellelements auslenkbar ist, **dadurch gekennzeichnet, dass** der elektrostatische Parallelplatten-Aktuator wenigstens drei übereinander angeordnete Elektrodenplatten (4,5,6) aufweist, wobei die Elektrodenplatten (5,6) jeweils relativ zur unmittelbar darunter liegenden Elektrodenplatte (4,5) gegen die Kraft eines Rückstellelements auslenkbar gehalten sind, und dass eine Parallelführung für die mit der Berührungsfläche (3) zusammenwirkende, oberhalb der wenigstens zwei anderen Elektrodenplatten (4,5) angeordnete Elektrodenplatte (6) vorgesehen ist, die eine Parallelbewegung der Berührungsfläche (3) erzwingt.

2. Eingabeelement nach Anspruch 1, **dadurch gekennzeichnet, dass** die Parallelführung von einer Parallelogrammführung gebildet ist.

3. Eingabeelement nach Anspruch 2, **dadurch gekennzeichnet, dass** die Parallelogrammführung an wenigstens einer Seite der Elektrodenplatten (4,5,6) zwei schwenkbare parallele Arme (11,12,13,14) aufweist, die mit den Elektrodenplatten (4,5,6) einzeln schwenkbar verbunden sind.

4. Eingabeelement nach Anspruch 2 oder 3, **dadurch gekennzeichnet, dass** die Parallelogrammführung an zwei gegenüberliegenden Seiten der Elektrodenplatten (4,5,6) jeweils zwei schwenkbare parallele Arme (11,12,13,14) aufweist, die mit den Elektrodenplatten (4,5,6) einzeln schwenkbar verbunden sind.

5. Eingabeelement nach Anspruch 4, **dadurch gekennzeichnet, dass** die an gegenüberliegenden Seiten der Elektrodenplatten (4,5,6) angeordneten Arme (11,12,13,14) mittels einer insbesondere drehfest verbundenen Querstrebe (22) miteinander gekoppelt sind.

6. Eingabeelement nach Anspruch 4 oder 5, **dadurch gekennzeichnet, dass** das Rückstellelement von wenigstens einem Federelement (17) gebildet ist, das zwei an der selben Seite der Elektrodenplatte (4,5,6) angeordnete Arme (11,12,13,14) miteinander verbindet.

7. Eingabeelement nach einem der Ansprüche 1 bis 6, **dadurch gekennzeichnet, dass** das Rückstellelement von wenigstens einem Federelement (24) gebildet ist, das zentral angeordnet ist und die oberste (6) und die unterste (4) Elektrodenplatte miteinander verbindet.

8. Eingabeelement nach einem der Ansprüche 1 bis 7, **dadurch gekennzeichnet, dass** zwei benachbarte Elektrodenplatten (4,5,6) jeweils durch wenigstens einen sich umfangsmäßig erstreckenden Abstandhalter in einem Abstand voneinander gehalten sind.

9. Eingabeelement nach Anspruch 8, **dadurch gekennzeichnet, dass** der Abstandhalter elastisch nachgiebig ausgebildet ist und das Rückstellelement ausbildet.

10. Eingabeelement nach einem der Ansprüche 1 bis 9, **dadurch gekennzeichnet, dass** Luftkanäle (23) vorgesehen sind, die in den Zwischenraum (10) zwischen zwei benachbarten Elektrodenplatten (4,5,6) münden, um einen Luftstrom in den oder aus dem Zwischenraum (10) zu erlauben.

11. Eingabeelement nach einem der Ansprüche 1 bis 10, **dadurch gekennzeichnet, dass** weiters ein Gehäuse für das Eingabeelement vorgesehen ist, wobei zwischen einem Gehäuserand (27) und einem Randbereich der Berührungsfläche (3) ein umlaufendes flexibles Dichtungselement (28) angeordnet ist.

12. Eingabeelement nach Anspruch 11, **dadurch gekennzeichnet, dass** der Gehäuserand (27) nach innen vorspringend ausgebildet ist und den Randbereich der Berührungsfläche (3) übergreift, sodass das Dichtungselement (28) in Richtung des Auslenkungshubes der mit der Berührungsfläche (3) zusammenwirkenden Elektrodenplatte (6) komprimierbar ist.

13. Eingabeelement nach Anspruch 11, **dadurch gekennzeichnet, dass** der Rand der Berührungsfläche (3) den Aktuator seitlich überragt und das Dichtungselement (28) so zwischen dem Rand der Berührungsfläche (3) und dem Gehäuse angeordnet ist, dass es in Richtung des Auslenkungshubes der mit der Berührungsfläche (3) zusammenwirkenden Elektrodenplatte (6) komprimierbar ist.

14. Eingabeelement nach Anspruch 11, **dadurch gekennzeichnet, dass** das Dichtungselement (28) einen radialen Ringspalt zwischen der Berührungsfläche (3) und dem Gehäuse überbrückt.

## Claims

1. Input element for electronic apparatuses having a contact face (3) which can move in a translatory fashion and interacts with an actuator, wherein the actuator is embodied as an electrostatic parallel-plate actuator whose electrode plates (4, 5, 6) are held at a variable normal distance from one another, wherein the electrode plate (6) which interacts with the contact face (3) can be deflected counter to the force of a restoring element, **characterized in that** the electrostatic parallel plate actuator has at least three electrode plates (4, 5, 6) which are arranged one on top of the other, wherein the electrode plates (5, 6) are each held such that they can be deflected relative to the electrode plate (4, 5) lying directly underneath counter to the force of a restoring element, and **in that** a parallel guiding means is provided for the electrode plate (6) which interacts with the contact face (3) and is arranged above the at least two other electrode plates (4, 5), which forcibly brings about a parallel movement of the contact face (3).

2. Input element according to Claim 1, **characterized in that** the parallel guiding means is formed by a parallelogram guiding means.

3. Input element according to Claim 2, **characterized in that** the parallelogram guiding means has, on at least one side of the electrode plates (4, 5, 6), two pivotable parallel arms (11, 12, 13, 14) which are connected in an individually pivotable fashion to the electrode plates (4, 5, 6).

4. Input element according to Claim 2 or 3, **characterized in that** the parallelogram guiding means has, on two opposite side of the electrode plates (4, 5, 6), in each case two pivotable parallel arms (11, 12, 13, 14) which are connected in an individually pivotable fashion to the electrode plates (4, 5, 6).

5. Input element according to Claim 4, **characterized in that** the arms (11, 12, 13, 14), arranged on opposite sides of the electrodes plates (4, 5, 6) are coupled to one another by means of a cross member (22) which is connected, in particular, in a rotationally fixed fashion.

6. Input element according to Claim 4 or 5, **characterized in that** the restoring element is formed by at least one spring element (17) which connects to one another two arms (11, 12, 13, 14) which are arranged on the same side of the electrode plate (4, 5, 6).

7. Input element according to one of Claims 1 to 6, **characterized in that** the restoring element is performed by at least one spring element (24) which is arranged centrally and connects the top electrode plate (6) and the bottom electrode plate (4) to one another.

8. Input element according to one of Claims 1 to 7, **characterized in that** two adjacent electrode plates (4, 5, 6) are each held at a distance from one another by at least one spacer element which extends around the circumference.

9. Input element according to Claim 8, **characterized in that** the spacer element is embodied in an elastically resilient fashion and forms the restoring element.

10. Input element according to one of Claims 1 to 9, **characterized in that** air ducts (23) are provided which open into the intermediate space (10) between two adjacent electrode plates (4, 5, 6) in order to permit an air flow into or out of the intermediate space (10).

11. Input element according to one of Claims 1 to 10, **characterized in that** a housing is also provided for the input element, wherein a circumferential flexible sealing element (28) is arranged between a housing edge (27) and an edge region of the contact face (3).

12. Input element according to Claim 11, **characterized in that** the housing edge (27) is embodied so as to project inwardly and engages over the edge region of the contact face (3) so that the sealing element (28) can be compressed in the direction of the deflection stroke of the electrode plate (6) which interacts with the contact face (3).

13. Input element according to Claim 11, **characterized in that** the edge of the contact face (3) projects laterally beyond the actuator, and the sealing element (28) is arranged between the edge of the contact face (3) and the housing in such a way that it can be compressed in the direction of the deflection stroke of the electrode plate (6) which interacts with the contact face (3).

14. Input element according to Claim 11, **characterized in that** the sealing element (28) spans a radial annular gap between the contact face (3) and the housing.

## Revendications

1. Élément de saisie pour appareils électroniques comprenant une surface de contact (3) mobile en translation, qui coopère avec un actionneur, l'actionneur étant réalisé sous la forme d'un actionneur électrostatique à plaques parallèles dont les plaques d'électrode (4, 5, 6) sont maintenues à un écart normal variable entre elles, la plaque d'électrode (6) qui coopère avec la surface de contact (3) pouvant être déviée en s'opposant à la force d'un élément de rappel, **caractérisé en ce que** l'actionneur électrostatique à plaques parallèles possède au moins trois plaques d'électrode (4, 5, 6) disposées les unes au-dessus des autres, les plaques d'électrode (5, 6) étant respectivement maintenues de manière à pouvoir être déviées en s'opposant à la force d'un élément de rappel respectivement par rapport aux plaques d'électrode (4, 5) qui se trouvent directement au-dessous, et **en ce qu'**un guide parallèle est présent pour la plaque d'électrode (6) qui coopère avec la surface de contact (3) et qui est disposée au-dessus des au moins deux autres plaques d'électrode (4, 5), lequel force un mouvement parallèle de la surface de contact (3).

2. Élément de saisie selon la revendication 1, **caractérisé en ce que** le guide parallèle est formé par un guide en parallélogramme.

3. Élément de saisie selon la revendication 2, **caractérisé en ce que** le guide en parallélogramme possède, sur au moins un côté des plaques d'électrode (4, 5, 6), deux bras (11, 12, 13, 14) parallèles pivotants qui sont reliés aux plaques d'électrode (4, 5, 6) en pouvant pivoter individuellement.

4. Élément de saisie selon la revendication 2 ou 3, **caractérisé en ce que** le guide en parallélogramme possède, sur deux côtés opposés des plaques d'électrode (4, 5, 6), respectivement deux bras (11, 12, 13, 14) parallèles pivotants qui sont reliés aux plaques d'électrode (4, 5, 6) en pouvant pivoter individuellement.

5. Élément de saisie selon la revendication 4, **caractérisé en ce que** les bras (11, 12, 13, 14) disposés sur les deux côtés opposés des plaques d'électrode (4, 5, 6) sont couplés les uns aux autres au moyen d'un élément jointif transversal (22) notamment relié de manière solidaire en rotation.

6. Élément de saisie selon la revendication 4 ou 5, **caractérisé en ce que** l'élément de rappel est formé par au moins un élément ressort (17) qui relie ensemble deux bras (11, 12, 13, 14) disposés sur le même côté des plaques d'électrode (4, 5, 6).

7. Élément de saisie selon l'une des revendications 1 à 6, **caractérisé en ce que** l'élément de rappel est formé par au moins un élément ressort (24) qui est disposé de manière centrale et qui relie entre elles la plaque d'électrode la plus haute (6) et la plus basse (4).

8. Élément de saisie selon l'une des revendications 1 à 7, **caractérisé en ce que** deux plaques d'électrode (4, 5, 6) voisines sont respectivement maintenues à un écart donné l'une par rapport à l'autre par au moins une entretoise qui s'étend sur la périphérie.

9. Élément de saisie selon la revendication 8, **caractérisé en ce que** l'entretoise est configurée avec flexibilité élastique et forme l'élément de rappel.

10. Élément de saisie selon l'une des revendications 1 à 9, **caractérisé en ce que** des canaux à air (23) sont présents, lesquels débouchent dans l'espace intermédiaire (10) entre deux plaques d'électrode (4, 5, 6) voisines afin de permettre un courant d'air dans ou depuis l'espace intermédiaire (10).

11. Élément de saisie selon l'une des .revendications 1 à 10, **caractérisé en ce qu'**un boîtier est en outre présent pour l'élément de saisie, un élément d'étanchéité (28) flexible périphérique étant disposé entre un bord de boîtier (27) et une zone de bordure de la surface de contact (3).

12. Élément de saisie selon la revendication 11, **caractérisé en ce que** le bord de boîtier (27) est configuré en saillie vers l'intérieur et chevauche la zone de bordure de la surface de contact (3), de sorte que l'élément d'étanchéité (28) peut être comprimé dans la direction de la course de déviation de la plaque d'électrode (6) qui coopère avec la surface de contact (3) .

13. Élément de saisie selon la revendication 11, **caractérisé en ce que** le bord de la surface de contact (3) fait saillie latéralement de l'actionneur et l'élément d'étanchéité (28) est disposé entre le bord de la surface de contact (3) et le boîtier de telle sorte qu'il peut être comprimé dans la direction de la course de déviation de la plaque d'électrode (6) qui coopère avec la surface de contact (3).

14. Élément de saisie selon la revendication 11, **caractérisé en ce que** l'élément d'étanchéité (28) ponte un interstice annulaire radial entre la surface de contact (3) et le boîtier.
